# EUROPÄISCHE PATENTANMELDUNG

(11) **EP 2 169 787 A2**
(43) Veröffentlichungstag der Anmeldung: **31.03.2010**
(21) Anmeldenummer: 09010414.2
(22) Anmeldetag: 12.08.2009
(51) Int. Cl.: H01S 3/11, H01S 3/115, H01S 3/117

(54) **Laser und Verfahren zur Erzeugung gepulster Laserstrahlung**

(30) Priorität: 26.09.2008 DE 102008049085
(71) Anmelder: JENOPTIK Laser, Optik, Systeme GmbH, 07745 Jena (DE)
(72) Erfinder: Symanowski, Jan, 07743 Jena (DE); Hoffmann, Matthias, 07749 (DE); Ludemann, Michael, 99084 Erfurt (DE)
(74) Vertreter: Geyer, Fehners & Partner

(57) **Zusammenfassung**

Es wird ein Laser zur Erzeugung gepulster Laserstrahlung (2) bereitgestellt, der
einen Resonator (3),
ein im Resonator (3) angeordnetes laseraktives Medium (6),
einen im Resonator (3) angeordneten Güteschalter (8), der zur Einstellung der Resonatorgüte in einen ersten und einen zweiten Zustand bringbar ist, wobei die Resonatorgüte im ersten Zustand niedriger ist als im zweiten Zustand,
eine Detektionseinheit (10), die, wenn der Güteschalter (8) im zweiten Zustand ist, die Intensität des sich aufbauenden Laserpulses mißt und als Intensitätssignal (I) ausgibt, und eine Steuereinheit (11) zur Ansteuerung des Güteschalters (8) umfaßt, die in Abhängigkeit einer vorgegebenen Pulsdauer und des angelegten Intensitätssignals (I) den Güteschalter (8) von dem zweiten in den ersten Zustand schaltet, bevor der Pulsaufbau des Laserpulses abgeschlossen ist.

## Beschreibung

Die vorliegende Erfindung betrifft einen gütegeschalteten Laser zur Erzeugung gepulster Laserstrahlung.

Bei gütegeschalteten Lasern besteht die Schwierigkeit, daß die möglichen Pulswiederholraten relativ niedrig sind. So beträgt z.B. bei einem bekannten Yb:YAG-Laser die maximale Pulswiederholrate etwa 30 kHz. Des weiteren nimmt die Pulslänge der einzelnen Pulse der gepulsten Laserstrahlung mit zunehmender Pulswiederholrate ebenfalls zu.

Ausgehend hiervon ist es Aufgabe der Erfindung, einen gütegeschalteten Laser so weiterzubilden, daß eine höhere maximale Pulswiederholrate möglich ist und daß es bei zunehmender Pulswiederholrate möglich ist, die Pulslänge gleich zu halten oder sogar eine kürzere Pulslänge zu wählen.

Die Aufgabe wird gelöst durch einen Laser zur Erzeugung gepulster Laserstrahlung, mit einem Resonator, einem im Resonator angeordneten laseraktiven Medium, einem im Resonator angeordneten Güteschalter, der zur Einstellung der Resonatorgüte in einen ersten und zumindest einen zweiten Zustand bringbar ist, wobei die Resonatorgüte im ersten Zustand niedriger ist als im zweiten Zustand, einer Detektionseinheit, die, wenn der Güteschalter im zweiten Zustand ist, die Intensität des sich aufbauenden Laserpulses mißt und als Intensitätssignal ausgibt, und mit einer Steuereinheit zur Ansteuerung des Güteschalters, die in Abhängigkeit einer vorgegebenen Pulsdauer und des angelegten Intensitätssignals den Güteschalter von dem zweiten in den ersten Zustand schaltet, bevor der Pulsaufbau des Laserpulses abgeschlossen ist.

Damit wird es möglich, die Pulsdauer zu verkürzen und somit auf gewünschte Werte einzustellen. Da aufgrund des Abbruchs während des Pulsaufbaus das verbliebene Inversionsniveau im laseraktiven Medium höher ist im Vergleich zu dem Fall, in dem kein Abbruch beim Pulsaufbau stattfindet, können höhere Repetitionsraten (z.B. um den Faktor 2 - 10, insbesondere 3 - 5) und höhere Pulsspitzenleistungen erreicht werden.

Insbesondere kann mit dem erfindungsgemäßen Laser die Pulsdauer und die Pulswiederholrate in weiten Bereichen voneinander unabhängig eingestellt werden. Ferner ist die maximale Pulswiederholrate deutlich höher im Vergleich zu einem herkömmlichen gütegeschalteten Laser, bei dem der Pulsaufbau nicht abgebrochen wird.

Insbesondere kann bei dem erfindungsgemäßen Laser der vorgegebenen Pulsdauer ein Intensitätswert der ansteigenden Flanke oder der absteigenden Flanke des Laserpulses zugeordnet sein. In diesem Fall wird bei Erreichen dieses Intensitätswertes die Umschaltung des Güteschalters bewirkt.

Der Laser ist insbesondere so ausgebildet, daß die Umschaltdauer des Güteschalters von dem zweiten in den ersten Zustand berücksichtigt wird, um die gewünschte Pulsdauer einzustellen. Es kann ferner noch die durch eine Ansteuerelektronik des Güteschalters erzeugte Verzögerung berücksichtigt werden.

Der Güteschalter kann als akustooptischer oder elektrooptischer Modulator ausgebildet sein.

Ferner kann die Steuereinheit die Umschaltung des Güteschalters von dem zweiten in den ersten Zustand elektronisch verzögern, um die maximal einstellbare Pulsdauer zu erhöhen.

Der Laser kann eine Einstelleinheit aufweisen, an der die vorgegebene Pulsdauer und eine vorgegebene Pulswiederholrate eingegeben werden können und die mit der Steuereinheit verbunden ist, wobei die Steuereinheit den Güteschalter so ansteuert, daß die gepulste Laserstrahlung Pulse mit der vorgegebenen Pulsdauer und der vorgegebenen Pulswiederholrate enthält.

Insbesondere kann die Einstelleinheit bei Eingabe der vorbestimmten Pulsdauer oder der vorbestimmten Pulswiederholrate die dann möglichen Pulswiederholraten bzw. die dann möglichen Pulsdauern zur Auswahl anzeigen. Damit wird ein Laser bereitgestellt, bei dem in einfachster Art und Weise die Pulsdauer und Pulswiederholrate eingestellt werden können.

Die Einstelleinheit kann als Hardware- oder Software-Modul oder als Kombination aus beiden realisiert sein.

Der Laser weist insbesondere noch eine Pumpquelle zum Pumpen des laseraktiven Mediums auf.

Ferner enthält der Laser dem Fachmann bekannte weitere Elemente, die zum Betrieb des Lasers notwendig sind.

Es wird ferner bereitgestellt ein Verfahren zur Erzeugung gepulster Laserstrahlung bei einem Laser mit einem Resonator, in dem ein Güteschalter, der zur Einstellung der Resonatorgüte in einen ersten und einen zweiten Zustand bringbar ist, wobei die Resonatorgüte im ersten Zustand niedriger ist als im zweiten Zustand, sowie ein laseraktives Medium angeordnet sind, wobei, wenn der Güteschalter im zweiten Zustand ist, die Intensität des sich aufbauenden Laserpulses gemessen und als Intensitätssignals ausgegeben wird und der Güteschalter in Abhängigkeit einer vorgegebenen Pulsdauer und des Intensitätssignals von dem zweiten in den ersten Zustand geschaltet wird, bevor der Pulsaufbau des Laserpulses abgeschlossen ist.

Mit diesem Verfahren ist es möglich, bei einem gütegeschalteten Laser die Pulsdauer und Pulswiederholrate in weiten Bereichen voneinander unabhängig einzustellen. Ferner kann die Pulswiederholrate im Vergleich zu einem herkömmlichen gütegeschalteten Laser deutlich erhöht werden.

Weiterbildungen des erfindungsgemäßen Verfahrens sind in den abhängigen Ansprüchen angegeben.

Es versteht sich, daß die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung beispielsweise anhand der beigefügten Zeichnungen, die auch efindungswesentliche Merkmale offenbaren, noch näher erläutert. Es zeigen:
- Fig. 1: eine schematische Ansicht einer Ausführungsform des erfindungsgemäßen Lasers;
- Fig. 2: eine Darstellung zur Erläuterung der Pulserzeugung;
- Fig. 3: eine weitere Darstellung zur Erläuterung der Pulserzeugung, und
- Fig. 4: ein Diagramm zur Erläuterung der möglichen Pulsdauer und Pulswiederholraten.

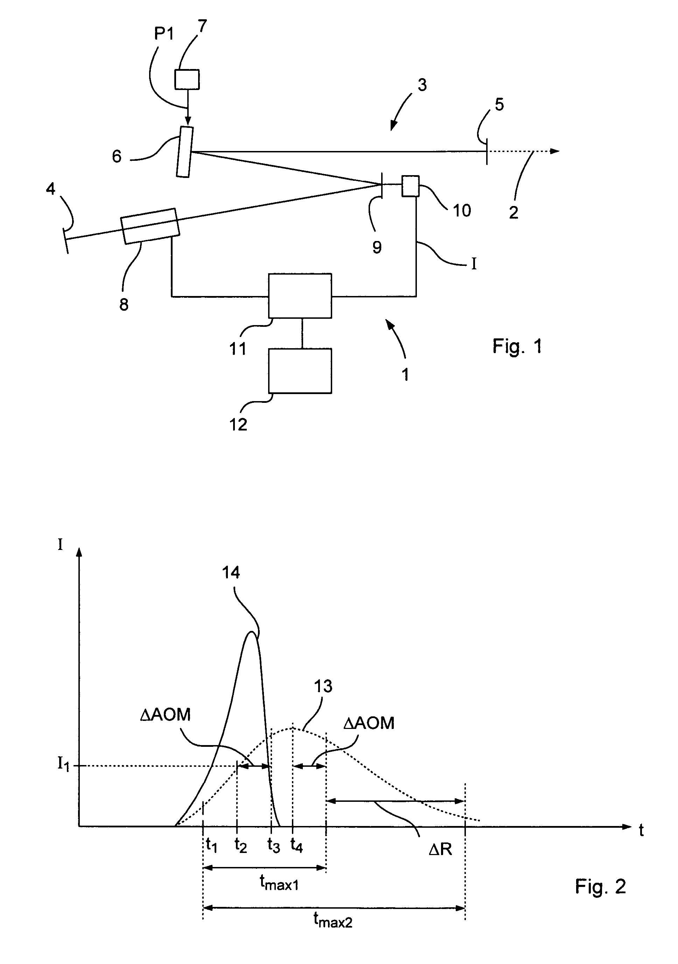

Bei der in Fig. 1 gezeigten Ausführungsform umfaßt der Laser 1 zur Erzeugung gepulster Laserstrahlung 2 einen Resonator 3 mit einem hochreflektiven Endspiegel 4 sowie einem Auskoppelspiegel 5, dessen Auskoppelgrad etwa 10 % beträgt.

In dem Resonator 3 ist ein laseraktives Medium 6 (Yb:YAG) angeordnet, das mit dem Licht einer Pumplichtquelle 7 (hier kontinuierlich) gepumpt wird (Pfeil P1).

In dem Resonator 3 sind ferner ein Güteschalter 8 in Form eines akustooptischen Modulators sowie ein Umlenkspiegel 9 angeordnet. Der Umlenkspiegel 9 koppelt einen geringen Teil der reflektierten Laserstrahlung aus. Dieser Teil wird von der hinter dem Umlenkspiegel 9 angeordneten Detektionseinheit 10 gemessen und als Intensitätssignal I ausgegeben.

Der Laser 1 umfaßt weiterhin eine Steuereinheit 11, an der das Intensitätssignal I angelegt ist und die den akustooptischen Modulator 8 zwischen seinem ersten Zustand niedriger Güte und seinem zweiten Zustand hoher Güte hin und her schalten kann, sowie eine Einstelleinheit 12, an der eine gewünschte Pulswiederholrate sowie eine gewünschte Pulsdauer eingestellt werden können.

Die Erzeugung der Pulse mit der eingestellten Pulsdauer (nachfolgend auch als geregelter Puls bezeichnet) wird bei dem erfindungsgemäßen Laser 1 wie folgt durchgeführt. Der akustooptische Modulator 8 ist in seinem ersten Zustand niedriger Güte geschaltet, so daß aufgrund der hohen Resonatorverluste keine Laseraktivität eintritt, jedoch das gewünschte Niveau der Besetzungsinversion erreicht wird.

Nach Umschalten des akustooptischen Modulators in seinen zweiten Zustand höherer Güte setzt die Laseraktivität ein, so daß der in Fig. 2 gestrichelt dargestellte Laserpuls 13 (ungeregelter Puls) erzeugt werden würde, wenn der akustooptische Modulator 8 lange genug in seinem zweiten Zustand bleibt.

Jedoch wird mittels der Detektionseinheit 10 laufend die Intensität im Resonator und somit auch des sich aufbauenden Laserpulses 13 gemessen und als Intensitätssignal I an die Steuereinheit 11 angelegt. Die Steuereinheit 11 ist so ausgelegt, daß der gewünschten Pulsdauer ein Intensitätswert I₁ zugeordnet ist, so daß bei Erreichen des zugeordneten Intensitätswertes I₁ zur Zeit t₂ die Steuereinheit 11 den akustooptischen Modulator 8 von seinem zweiten in seinen ersten Zustand schaltet. Aufgrund der nun wieder auftretenden großen Resonatorverluste, wird der Pulsaufbau unterbrochen und ein kürzerer Puls 14 mit höherer Pulsspitzenleistung verläßt den Resonator 3.

Nachdem zwischen dem Anlegen eines Schaltsignals an den akustooptischen Modulator 8 zum Umschalten von seinem zweiten Zustand in seinen ersten Zustand bis zum Erreichen des ersten Zustandes eine vorbestimmte Zeitdauer ΔAOM vergeht, ist der akustooptische Modulator 8 erst zur Zeit t₃ in seinen ersten Zustand geschaltet. Ab diesem Zeitpunkt t₃ wird somit der Pulsaufbau tatsächlich abgebrochen, wodurch der Puls 14 erzeugt wird, dessen Pulsdauer kürzer ist als die Pulsdauer des Pulses 13. Das verbleibende höhere Inversionsniveau sorgt für eine höhere erreichbare Repetitionsrate (hier etwa um den Faktor 3 im Vergleich zu den ungeregelten Pulsen 13) und höhere Pulsstabilität.

Es hat sich als vorteilhaft erwiesen, die Intensität während der steigenden Flanke des Pulses 13 zu bestimmen und als Maß für die einzustellende Pulslänge zu verwenden. Bei dem hier beschriebenen Beispiel, können somit Intensitätswerte zwischen den Zeitpunkten t₁ und t₄ zur Einstellung einer gewünschten Pulsdauer verwendet werden. Die minimal mögliche Pulslänge wird durch die Schaltdauer ΔAOM begrenzt. Bei dem hier gewählten Aufbau beträgt die minimale Pulslänge zwischen 100 ns und 200 ns.

Die maximale einstellbare Pulslänge tₘₐₓ₁ ist durch den Zeitpunkt t₄ sowie ΔAOM bestimmt, wie in Fig. 2 gezeigt ist. Diese maximale Pulslänge tₘₐₓ₁ beträgt hier ca. 700 ns.

Die Pulse 13 und 14, die natürlich nicht gleichzeitig auftreten, sind in der Darstellung von Fig. 2 so eingezeichnet, daß die Zeitpunkte des Pulsanfangs zusammenfallen. Man kann dieser Darstellung daher gut entnehmen, daß die ansteigende Flanke des Pulses 14 steiler ist als die ansteigende Flanke des Pulses 13. Dies ist hauptsächlich darin begründet, daß bei der erfindungsgemäßen Erzeugung der Pulse durch den bei der Erzeugung jedes einzelnen Pulses durchgeführten Abbruch des Pulsaufbaus das im Resonator verbleibende Inversionsniveau höher ist im Vergleich zu dem Fall der ungeregelten Erzeugung der Pulse 13.

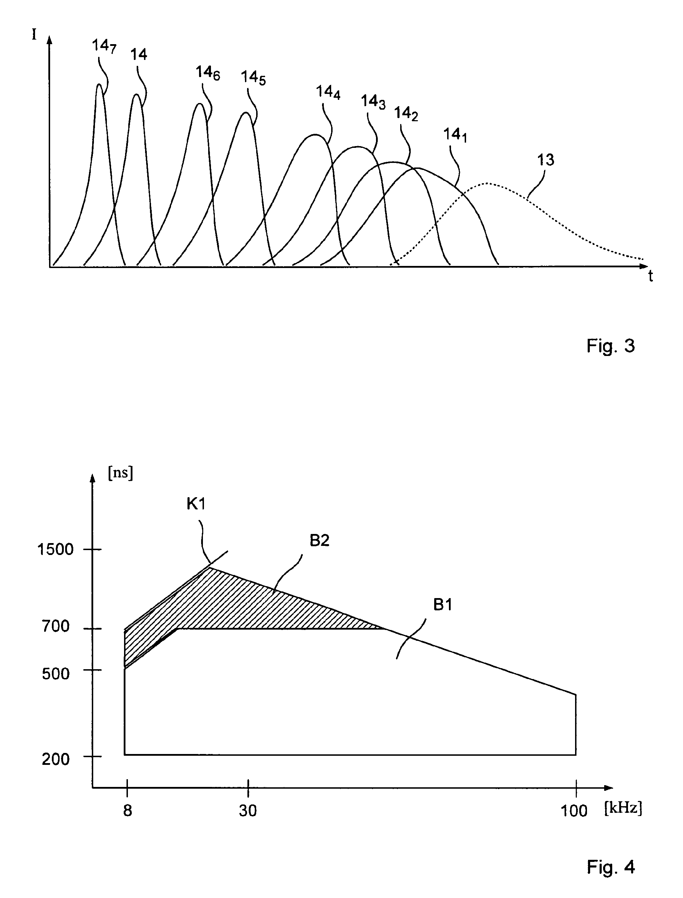

In Fig. 3 sind verschiedene erzeugbare Laserpulse 14, 14₁, 14₂, ...14₇ im Vergleich zum Laserpuls 13 für den ungeregelten Fall gezeigt, wobei jeder Laserpuls 13, 14, 14₁, ...14₇ auf der Zeitachse t relativ zu dem Triggerzeitpunkt eingezeichnet ist, zu dem die Steuereinheit 11 den akustooptischen Modulator 8 zum Umschalten von seinem ersten Zustand in seinen zweiten Zustand ansteuert. Der Triggerzeitpunkt ist nicht eingezeichnet.

Der Darstellung kann gut entnommen werden, daß der geregelte Puls 14₁ mit der längsten Pulsdauer eine sehr ähnliche Pulsform wie der ungeregelte Puls 13 aufweist. Der Abbruch der Pulserzeugung ist durch den steilen Abfall ab Mitte der abfallenden Flanke ersichtlich.

Mit kürzer werdender Pulsdauer des Puls 14₂, 14₃, ... 14 und 14₇ steigt die Pulsspitzenleistung (höhere Pulse) und nimmt die Zeit bis zum Beginn der Pulserzeugung relativ zum Triggerzeitpunkt ab (Pulse "rutschen" in Fig. 3 nach links). Dieses Verhalten ist auf das bereits beschriebene höhere verbleibende Inversionsniveau zurückzuführen.

In Fig. 4 ist ein Diagramm gezeigt, bei dem die möglichen Pulsbreiten (entlang der Abszisse) in Abhängigkeit der einstellbaren Wiederholrate (entlang der Ordinate) gezeigt sind. Dabei zeigt die in dem Diagramm eingezeichnete Kurve K1 den Fall an, bei dem die Pulsbreite nicht gesteuert ist. In diesem Fall wird der akkustooptische Modulator 8 bei der Erzeugung der Pulse 13 immer erst dann von seinem zweiten in seinen ersten Zustand geschaltet, wenn die Pulserzeugung vollständig abgeschlossen ist. Wie der Kurve K1 zu entnehmen ist, sind Pulswiederholraten im Bereich von 8 - 30 kHz möglich.

Der in dem Diagramm von Fig. 4 eingezeichnete Bereich B1 gibt an, in welchen Bereich die Pulsbreite mit dem erfindungsgemäßen Abbruch der Pulserzeugung einstellbar ist. Es sind Pulsbreiten im Bereich von 200 - 700 ns möglich, wobei jedoch deutlich höhere Pulswiederholraten einstellbar sind als bei der Erzeugung der ungeregelten Pulse 13. Dies ist hauptsächlich darin begründet, daß bei der Verkürzung der Pulsdauer durch Unterbrechung des Pulsaufbaus in der beschriebenen Art und Weise das verbleibende Inversionsniveau im laseraktiven Medium 6 höher ist als im Vergleich zu dem Fall, in dem die Pulserzeugung nicht unterbrochen wird, so daß aufgrund der höheren verbliebenen Inversion die Pulswiederholungsrate deutlich erhöht werden kann und dennoch eine ausgezeichnete Pulsstabilität vorliegt.

In dem in Fig. 4 schematisch dargestellten Bereich B1 kann die Pulswiederholrate und die Pulsbreite frei gewählt werden.

Es ist bei dem erfindungsgemäßen Laser 1 ferner möglich, die gesteuerte Pulsbreite der Pulse 14 dadurch zu erhöhen, daß zusätzlich zu der vorhandenen Modulatorschaltdauer ΔAOM eine elektronische Verzögerung ΔR mittels der Steuereinheit 11 eingeführt wird. Dies führt zu einer größeren maximalen Pulsdauer Tₘₐₓ₂, wie in Fig. 2 schematisch gezeigt ist. Diese größere Pulsdauer erschließt den in Fig. 4 schraffiert gezeigten Bereich B2, so daß auch in diesem Bereich liegende Wertepaare von Pulsdauer und Pulswiederholrate einstellbar sind und B1 und B2 eingeschlossen werden.

Insbesondere kann die Einstelleinheit 12 so ausgebildet sein, daß sie bei Eingabe einer gewünschten Pulsbreite (bzw. Pulsdauer) die bei dieser Pulsdauer möglichen Pulswiederholraten (gemäß des Bereichs B1 und gegebenenfalls gemäß des Bereichs B2) zur Auswahl anbietet. Das dann ausgewählte Wertepaar von Pulsdauer und Pulswiederholrate wird über die Einstelleinheit 12 an die Steuereinheit 11 angelegt, die den akustooptischen Modulator 8 entsprechend ansteuert, so daß die Pulse 14 der gepulsten Laserstrahlung 2 mit der gewünschten Pulsdauer und Pulswiederholrate auftreten. Natürlich ist es auch möglich, daß die Einstelleinheit 12 bei Eingabe einer gewünschten Pulswiederholrate die möglichen Pulsbreiten zur Auswahl anzeigt.

## Patentansprüche

1. Laser zur Erzeugung gepulster Laserstrahlung (2), mit
einem Resonator (3),
einem im Resonator (3) angeordneten laseraktiven Medium (6),
einem im Resonator (3) angeordneten Güteschalter (8), der zur Einstellung der Resonatorgüte in einen ersten und einen zweiten Zustand bringbar ist, wobei die Resonatorgüte im ersten Zustand niedriger ist als im zweiten Zustand,
einer Detektionseinheit (10), die, wenn der Güteschalter (8) im zweiten Zustand ist, die Intensität des sich aufbauenden Laserpulses mißt und als Intensitätssignal (I) ausgibt, und mit einer Steuereinheit (11) zur Ansteuerung des Güteschalters (8), die in Abhängigkeit einer vorgegebenen Pulsdauer und des angelegten Intensitätssignals (I) den Güteschalter (8) von dem zweiten in den ersten Zustand schaltet, bevor der Pulsaufbau des Laserpulses abgeschlossen ist.

2. Laser nach Anspruch 1, bei dem der vorgegebenen Pulsdauer ein Intensitätswert der ansteigenden oder abfallenden Flanke des Laserpulses zugeordnet ist.

3. Laser nach einem der obigen Ansprüche, bei dem der Güteschalter (8) als akustooptischer oder elektrooptischer Modulator ausgebildet ist.

4. Laser nach einem der obigen Ansprüche, bei dem die Steuereinheit zur Einstellung der Pulsdauer die Umschaltung des Güteschalters (8) von dem zweiten in den ersten Zustand elektronisch verzögert durchführt.

5. Laser nach einem der obigen Ansprüche, mit einer Einstelleinheit (12), an der die vorgegebene Pulsdauer und eine vorgegebene Pulswiederholrate eingegeben werden können und die mit der Steuereinheit (11) verbunden ist, wobei die Steuereinheit (11) den Güteschalter (8) so ansteuert, daß die Pulse (14) der gepulsten Laserstrahlung (2) mit der vorgegebenen Pulsdauer und der vorgegebenen Pulswiederholrate auftreten.

6. Laser nach Anspruch 5, bei dem die Einstelleinheit (12) bei Eingabe der vorbestimmten Pulsdauer oder der vorbestimmten Pulswiederholrate die möglichen Pulswiederholraten bzw. die möglichen Pulsdauern zur Auswahl anzeigt.

7. Verfahren zur Erzeugung gepulster Laserstrahlung bei einem Laser mit
einem Resonator, in dem ein Güteschalter, der zur Einstellung der Resonatorgüte in einen ersten und einen zweiten Zustand bringbar ist, wobei die Resonatorgüte im ersten Zustand niedriger ist als im zweiten Zustand, sowie ein laseraktives Medium angeordnet sind,
wobei, wenn der Güteschalter im zweiten Zustand ist, die Intensität des sich aufbauenden Laserpulses gemessen und als Intensitätssignal ausgegeben wird und der Güteschalter in Abhängigkeit einer vorgegebenen Pulsdauer und des Intensitätssignals von dem zweiten in den ersten Zustand geschaltet wird, bevor der Pulsaufbau des Laserpulses abgeschlossen ist.

8. Verfahren nach Anspruch 7, bei dem der vorgegebenen Pulsdauer ein Intensitätswert der ansteigenden Flanke des Laserpulses zugeordnet wird.

9. Verfahren nach Anspruch 7 oder 8, bei dem der Güteschalter als akustooptischer oder elektrooptischer Modulator ausgebildet wird.

10. Verfahren nach einem der Ansprüche 7 bis 9, bei dem zur Einstellung der Pulsdauer die Umschaltung des Güteschalters von dem zweiten in den ersten Zustand elektronisch verzögert durchgeführt wird.

11. Verfahren nach einem der Ansprüche 7 bis 10, bei dem ein Einstelleinheit vorgesehen wird, an der die vorgegebene Pulsdauer und eine vorgegebene Pulswiederholrate eingegeben werden können, wobei der Güteschalter so angesteuert wird, daß die Pulse der gepulsten Laserstrahlung mit der vorgegebenen Pulsdauer und der vorgegebenen Pulswiederholrate auftreten.

12. Verfahren nach Anspruch 11, bei dem die Einstelleinheit bei Eingabe der vorbestimmten Pulsdauer oder der vorbestimmten Pulswiederholrate die möglichen Pulswiederholraten bzw. die möglichen Pulsdauern zur Auswahl anzeigt.
